# EUROPEAN PATENT APPLICATION

(11) **EP 1 705 941 A1**
(43) Date of publication of application: **27.09.2006**
(21) Application number: 05251871.9
(22) Date of filing: 24.03.2005
(51) Int. Cl.: H04Q 7/38

(54) **Secure communication of password information in a network**

(71) Applicant: BRITISH TELECOMMUNICATIONS public limited company, London EC1A 7AJ (GB)
(72) Inventor: The designation of the inventor has not yet been filed
(74) Representative: Lofting, Coreena Fiona Anne

(57) **Abstract**

Password information stored on a SIM card (15) of a mobile station (MS1) is communicated to a network application node (3) such as a banking server, which runs an application that can be accessed in a session by the mobile station (MS1) by the password. The password information is encrypted by the SIM card (15) so that it only ever leaves the SIM in encrypted form. Data concerning the password is sent through a secure channel to a network management node, which may comprise the HLR (10) of a mobile telecommunications network (PLMN1) to which user of the SIM is a subscriber. The HLR (10) may receive an encryption key from the SIM through the secure channel, which is forwarded to the network application node (3) to allow the encrypted password information to be decrypted at the application node and open the banking session with the mobile station (MS1). Alternatively, the encrypted password information is passed to the HLR (10) through the secure link and decrypted, thereafter to be supplied decrypted to the application node (3) to open the secure banking session.

## Description

### Description

This invention relates to securely communicating password information in a network such as a mobile telecommunications network.

It is well known that user terminals such as mobile stations for wireless cellular mobile networks, can be used to communicate with remote network nodes to perform applications. For example, a mobile handset can communicate over the air through a cellular telecommunications network to the Internet and hence to a banking server at a remote network node, so that the user of the handset can interrogate details of their bank account and perform banking operations remotely using the handset. Usually, access to the secure information held by the banking server requires entry of a password. Many other similar services can be accessed through the user terminal and each of them may require its own password, requiring the user to either remember a large number of passwords or to store them in memory.

It has previously been proposed to store passwords in a secure location which itself can be opened using a password. However, this is inherently risky since if the password to the store of passwords is found by some means, then the security of all the stored passwords is compromised.

This problem is particularly acute for mobile devices since if lost or stolen, there is a risk that all of the passwords held in the device will be compromised.

The invention seeks a solution to this problem. According to the invention, there is provided a method of securely communicating password information in a network that comprises a user terminal provided with smart card functionality in which the password information is stored, a network application node to receive the password information, and a network management node for establishing a secure communication channel with the user terminal, comprising: using the smart card functionality to encrypt the password information stored thereon with an encryption key, to provide encrypted password information, passing the encrypted password information to the network, passing data pertaining to the password to the network management node through the secure channel, decrypting the encrypted password information at one of the nodes, and sending data pertaining to the password from the network management node to the network application node, so as to provide the password unencrypted at the network application node.

The encrypted password information may be passed to the network application node, with the key from the smart card being passed to the network management node through the secure channel, and then from the network management node to the network application node, so as to enable the encrypted password information to be decrypted at the network application node.

Also, the encrypted password information may be passed to the network management node through the secure channel and decrypted at the network management node, the decrypted password information then being supplied from the network management node to the to the network application node.

The user terminal may be a mobile station for a mobile telecommunications network and the network management node may be a home location register for the telecommunications network.

The invention also provides a network configured to perform the aforesaid method.

The invention also includes a user terminal for communicating password information securely in a network comprising a network application node to receive the password information, and a network management node for establishing a secure communication channel with the user terminal, the user terminal comprising: smart card functionality in which the password information is stored, operable to encrypt the password information stored therein with an encryption key, to provide encrypted password information, and a transmitter arrangement operable to pass the encrypted password information to be received by one of said nodes, and to pass data pertaining to the password to the network management node through the secure channel, to enable the encrypted password information to be decrypted at one of the nodes and provide the decrypted password at the network application node.

The invention further includes a smart card for a user terminal to communicate password information securely in a network that comprises a network application node to receive the password information for providing access for the user terminal to an application through the node, and a network management node for establishing a secure communication channel with the user terminal, the smart card including a memory which stores the password information, and a processor operable to encrypt the password information stored thereon with an encryption key, to provide encrypted password information, such as to pass the encrypted password information to the user terminal for transmission to the network for providing access to the application run by the network application node.

The invention further provides a network management node for establishing a secure communication channel with a user terminal provided with smart card functionality that stores password information, to be encrypted and sent as encrypted password information for use in providing access for a session between the user terminal and an application run by a network application node, the network management node comprising: a memory to receive data pertaining to the password information from the from the smart card through the secure channel, and a processor configuration operable to receive a request pertaining to the password from the network application node, and the processor configuration being operable to send data pertaining to the password information to the network application node in response to the request, so as to enable the password information when decrypted to prove access to the application run by the network application node.

In order that the invention may be more fully understood an embodiment thereof will be described by way of example with reference to the accompanying drawings in which:
Figure 1 is a schematic block diagram of a mobile telecommunications network,
Figure 2 is a schematic illustration of the user terminal shown in Figure 1,
Figure 3 illustrates the USIM card shown in Figure 2, in more detail,
Figure 4 is a more detailed illustration of the HLR/AC shown in Figure 1,
Figure 5 is a more detailed illustration of the banking server 3 shown in Figure 1,
Figure 6 is a signalling diagram for sending password information securely through the network, and
Figure 7 is another signalling diagram for sending password information securely through the network.

### Network overview

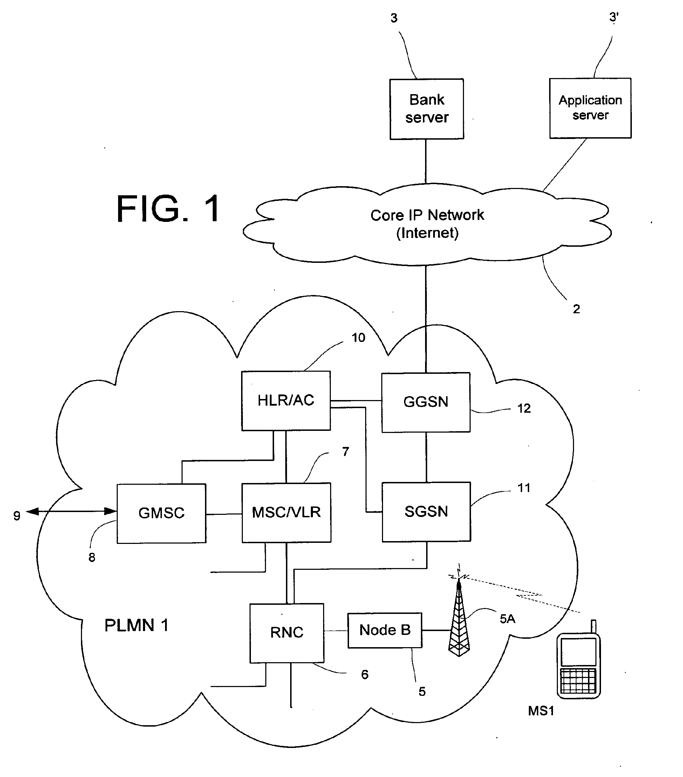

Referring to Figure 1, a user terminal that comprises a mobile station MS1, is in communication with a third generation (3G) cellular mobile telecommunications network 1 that is coupled through a core IP network 2, the Internet in this example, to a banking server 3. The banking server 3 acts as a network application node so that the mobile station MS1 can run a banking software application, e.g. to be a client for the banking server 3 so that the user of a mobile station can access individual bank accounts remotely. Other network application nodes can be accessed by the mobile station MS1 through the network configuration, illustrated schematically by node 3'. The node 3' may provide applications such as on-line vending and data download services.

The configuration of the 3G network 1 is generally in accordance with the ITU-2000 Recommendations and comprises a series of base stations 5, one of which is shown, Node B, which has an associated antenna 5A. The base station 5 controls radio communication for a cell of a network. A group of such base stations 5 is controlled by a radio network controller (RNC) 7. A mobile switching centre (MSC) 7 which also acts as a visitor location register (VLR) can route calls through a gateway MSC (GMSC) 8 to and from a public service telephone network (PSTN) not shown, through a link 9 that can also handle ISTN communications.

The network 1 also includes a network management node in the form of a home location register (HLR) 10 that also acts as an authentication centre (AC). The MSC/VLR 7, GMSC 8 and HLR/AC 10 allow calls to be routed to and from the PSTN through communication link 9 to the MSC/VLR 7 to an appropriate RMC, Node B and antenna for communication with individual mobile stations at different locations in different cells of the network. The MSC/VLR 7 monitors mobile stations that roam to the network 1. The HLR 10 keeps a record of home subscribers to the network and provides an authentication function when communication is initiated with individual mobile stations through the network 1. As explained in more detail hereinafter, the HLR 10 also acts a network management node for the communication of password information.

The 3G network 1 can route packet data to and from the mobile station MS1 using general packet radio service (GPRS), through a GPRS support node (SGSN) 11 and a gateway GPRS support node (GGSN) 12 connected to the core IP network 2 i.e. the Internet. Thus, packet data which in this example is in TCP/IP format, can be communicated to and from the mobile station MS1 through the network 1. In the following example, when the mobile station MS1 accesses the banking server 3, MS1 may run a browser application which receives data in TCP/IP format from the server 3 for display.

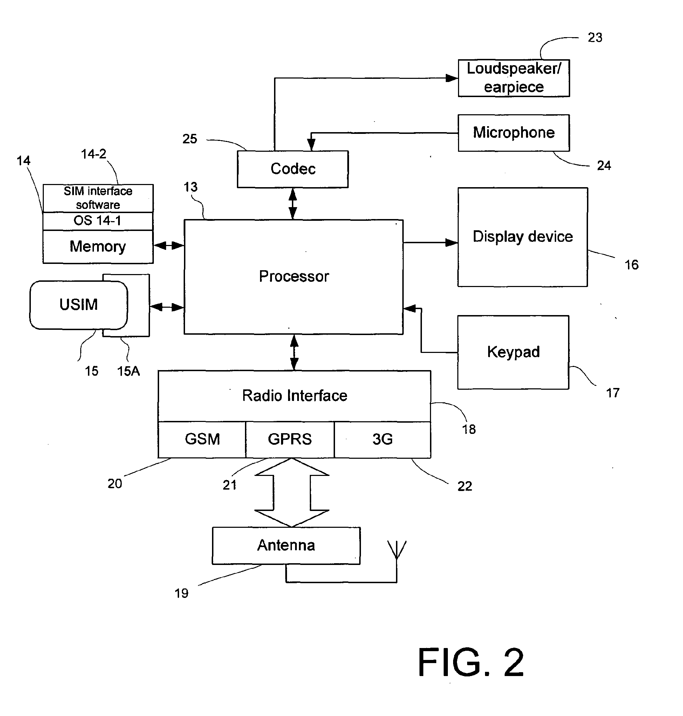

Figure 2 illustrates the major circuit components of the mobile station MS1. The mobile station MS1 may comprise a 3G handset capable of handling both voice telephony and data through 3G and GSM networks with GPRS. Alternatively, MS1 may comprise a personal digital assistant (PDA) or a laptop or other computer that is enabled for radio communication with the network 1. The mobile station MS1 comprises a main processor 13 with an associated memory arrangement 14. The memory 14 can be of any suitable form, for example RAM and ROM together with rewritable storage such as flash memory or a hard disc. Also, a smart card comprising a SIM card 15, a USIM in this example for the 3G network 1, is removably received in a SIM card holder 15A so as to be coupled to the processor 13. The memory 14 stores software 14-1 for the mobile operating system of the terminal together with SIM interface software 14-2, such as Java JSR 177 or SIM Toolkit according to the ETSI GSM 11.14 standard.

The processor 13 drives a display device 16 e.g. a liquid crystal display panel, under the control of a keypad 17.

The processor 13 can communicate with the network 1 through a radio interface 18 coupled to an antenna arrangement 19.

The radio interface 12 includes circuit configurations for communicating with the different networks and components 20-22 allow communication with GSM networks with GPRS and 3G networks.

Voice telephony and audio outputs are fed to and from the processor 13 by means of a loudspeaker/ear piece arrangement 23 and microphone 24 through a codec 25.

### SIM card 15

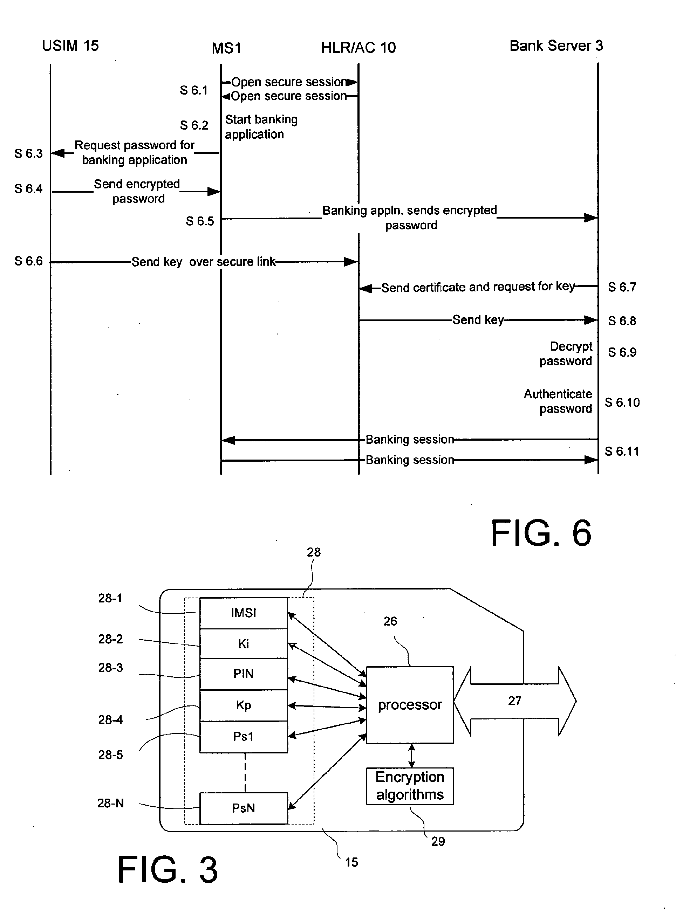

The SIM card 15 is illustrated in more detail in Figure 15. As well known in the art, SIM cards comprise smart cards with an integrated circuit processor and associated memory which stores data corresponding to the identity of the subscriber. The card can be removably fitted to different mobile stations so that the card itself provides the subscriber identity rather than the station. Referring to Figure 3 in more detail, the SIM card 15 has an on-board processor 26 with an electrical connection 27 to the SIM card holder 15a shown in Figure 2. The card 15 also includes a semiconductor memory region 28 which includes a plurality of memory locations that store data corresponding to the subscriber.

Memory location 28-1 includes data corresponding to the international mobile subscriber identity (IMSI). Memory location 28-2 stores a secret key Ki that is personal to the subscriber. The definition of the IMSI and Ki may be in accordance with the GSM/ITU-2000 Recommendations. Memory allocation 28-3 stores data corresponding to an individual personal identity number (PIN) that provides access to data in the SIM card 15. As known in the art, when the mobile station MS1 is initially switched on, the card 15 may prompt the user at the mobile station to enter a PIN code through the keypad 17 and the SIM card 15 will only interact with a processor 13 in the mobile station MS1 if the correct PIN code is entered. The memory region 28 also includes memory allocations 28-5... 28-N for use in managing passwords. As explained previously, the mobile station MS1 may be used to communicate with banking server 3 and to enable the user of MS1 to obtain secure data from the server 3, a password needs to be entered. In this example, password data Ps1 for the banking server is stored in memory allocation 28-5 shown in Figure 3. Memory allocations 28-6... 28-N can store individual user passwords for other applications, e.g. for communicating the server or other service provided from an application node 3' through the internet 2. The memory allocation 28-4 stores data corresponding to a key Kp for use in encrypting passwords for transmission over the network 1. As will be explained in more detail later, whenever the passwords are transmitted from the SIM card 15, they are encrypted according to an encryption algorithm stored in memory allocation 29.

### Opening a secure communication channel with HLR/AC 10

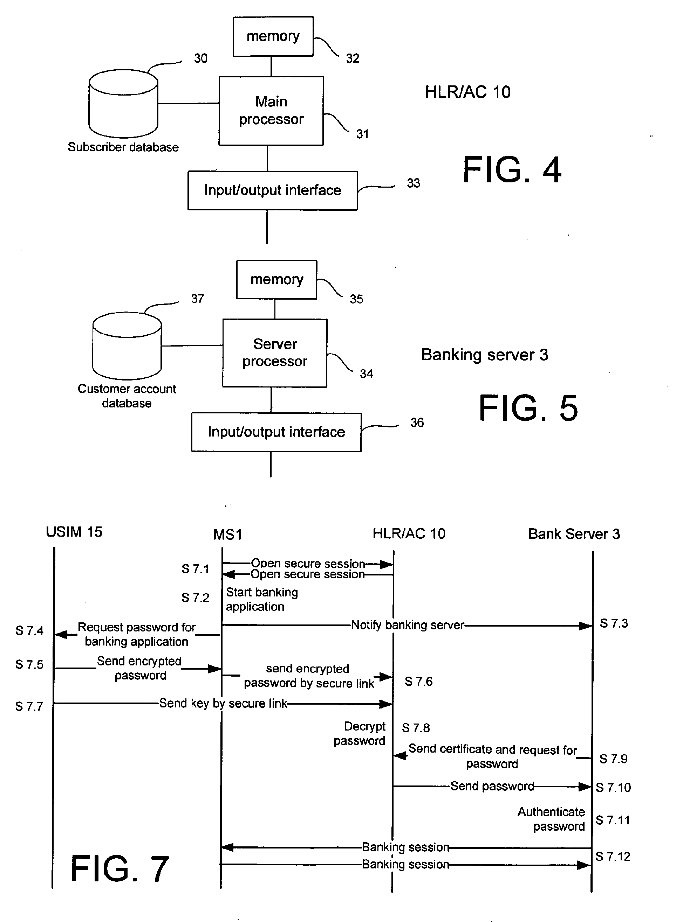

Figure 5 illustrates the HLR/AC 10 in more detail. The HLR 10 includes a subscriber database 30 which contains the name, address and billing details for subscribers to a network 1, in association with their respective IMSIs and Kis. The HLR further includes a main processor 31 and associated memory 32 coupled to the network 1 through an input/output interface 33.

When the mobile station MS1 initiates a call through the network 1, details of the IMSI and Ki from SIM card 15 are authenticated by reference to data from the subscriber database 30, using a secure authentication technique.

To perform the authentication, the main processor 31 generates a challenge in the form of a random number RAND which is communicated through the input/output interface 33, through MSC 7 shown in Figure 1, RMC 6 and base station 5 to MS1. Both the processor 26 of SIM card 15 and the main processor 31 of HLR 10 can run an encryption algorithm known in the GSM/ITU-2000 Recommendations as A3. On receipt of the random number RAND from the processor 13 of MS1 (Figure 2), the processor 26 SIM card 15 (Figure 3) produces a signed result SRES that is created by cryptographically combining the secret code Ki stored at memory allocation 28-2 with RAND according to the algorithm A3. A corresponding computation is performed by the main processor 31 of the HLR/AC 10. The algorithm A3 is stored in the memory 32 and details of the corresponding Ki for the subscriber's IMSI are obtained from the subscriber database 30. The signed result SRES produced at the mobile station MS1 is communicated through the network 1 back to the HLR/AC 10 and compared with a corresponding signed result SRES' produced locally by the main processor 31 at the HLR/AC. If the signed results SRES and SRES' coincide, the subscriber for MS1 is authenticated.

Thereafter, a secure communication channel is opened between MS1 and the network 1. Signals transmitted over the air between MS1 and the network 1 are typically encrypted using an algorithm referred to in the GSM Recommendations as A5 and individual session keys Kc are produced so that transmitted data can be encrypted using the algorithm A5 and encryption key Kc. The key Kc can be computed by combining the value of Kᵢ and the value of RAND used for the authentication, according to an algorithm A8 from the GSM specifications. Thus, a secure, encrypted communication channel is opened between the mobile station MS1 and the network 1, and in particular with the HLR/AC 10.

### Banking server 3

The banking server 3 is illustrated in more detailed in Figure 5 and comprises a server processor 34 with associated memory 35, connected to the Internet 2 through an input/output interface 36 that may include an IP firewall. The memory 35 stores a copy of the algorithm used to encrypt user passwords at the SIM 15.

The server processor 34 can access a customer account database 37 which contains confidential financial information relating to individual customer accounts.

### Operation

In the following example, a subscriber to network 1 uses mobile station MS1 to review a bank account and perform banking operations by interacting with the banking server 3.

Referring to Figure 6, at step S6.1 the user turns on the mobile station MS1 and opens a secure session with the network 1. This can be carried out as described above, by initially entering the PIN code corresponding to the PIN data 28-4 held on the SIM card 15, in which case the processor 13 shown in Figure 2 is allowed access to the SIM card 15. Then, the subscriber is authenticated by opening a channel between MS1 and HLR/AC 10 and the authentication procedure described above is carried out. As previously mentioned, this involves the HLR sending a random number RAND to MS1, such that MS1 returns SRES to the HLR 10 to be compared with the corresponding locally calculated value. The subscriber is authenticated if the instances of SRES from MS1 and HLR/AC 10 are the same. Then, session keys Kc for the secure session are prepared using the algorithm A8 as discussed above and a secure, encrypted channel is opened between the HLR 10 and the mobile station MS1, for which data is encrypted and decrypted using the algorithm A5 and a session key Kc.

At step S6.2, the subscriber runs a banking application on the mobile station MS1. For example, the banking application may comprise a micro browser application stored in memory 14, which is run by processor 13 to provide a browser display on the display device 16 under the control of keypad 17. The browser display may display data derived from the bank server 3 transmitted as TCP/IP packet data through Internet 2, GTSN 12, SGSN 11 and RNC 6 to the mobile station MS1, in response to data calls from MS1.

In order to obtain access to secure information from the customer account database 37 shown in Figure 5, the server processor 34 may request that MS1 provide a password for the banking application that is individual to the subscriber. At step S6.3, the processor 13 of the mobile station MS1 makes a request to the SIM card 15 for the banking application password. The password data may for example comprise data Ps1 stored at location 28-5 on SIM card 15. The subscriber may have used the keypad 17 and display device 16 in combination with processor 13 to store the individual password data Ps1 on the card 15 in a previous setting up operation.

In accordance with the invention, to provide improved security, the password data is only released from the SIM card 15 in an encrypted form. To this end, the processor 26 encrypts the data Ps1 using an encryption algorithm held in memory 29 and the password encryption key Kp stored in memory allocation 28-4. As shown at step S6.4 in Figure 6, the resulting encrypted password is supplied from SIM card 15 to the processor 13 of MS1 for use in the banking application currently being run by the processor, such that the banking application sends the encrypted password through network 1 and the Internet 2 to the banking server 3.

At step S6.6, the password encryption key Kp is sent in the secure communication channel through network 1 to HLR/AC 10. Step S6.6 is carried out in response to the request for the banking application password made at step S6.3. Referring to Figure 4, the key Kp is stored in the memory 32 of the HLR 10.

Thus, the banking password communicated to the bank server is encrypted to provide security such that the password only ever leaves the SIM card 15 in an encrypted form and cannot be accessed when unencrypted. This has the advantage that if the mobile station is lost or stolen or not authorised for network use, no access to the passwords stored on the SIM 15 is afforded, and the passwords are kept secure.

In order to allow the banking server 3 to decrypt the password, the server 3 sends a request for the encryption key Kp to the HLR/AC 10 at step S6.7. The request for the key Kp may be accompanied by a certificate that identifies the server 3. Schemes to provide digital certificates for trusted servers are well known in the art.

When satisfied with the identity of the server 3 and the authenticity of the key request, the HLR/AC 10 forwards the key Kp received at step S6.6, to the banking server 3. Referring to Figure 4, the key Kp is retrieved from the memory 32 by the processor 31 and fed through the input/output interface 33 to GGSN 12 (Figure 1) and through the Internet 2 to the banking server 3.

The banking server 3 holds a copy of the algorithm used to encrypt the banking password in its memory 35, and so the encrypted data received at step S6.5 can be decrypted as illustrated by step S6.9. The processor 34 of the banking server performs the decryption. Thereafter, at step S6.10 the password is authenticated by the processor 34 checking the decrypted password data against corresponding reference data held in the customer account database 37.

If the authentication is successful, details of the customer account are made available for communication to the mobile station MS1 for use by the banking application run by processor 13.

It will be understood that the SIM card 15 can hold many different passwords Ps1-PsN for use with different network application nodes that run different applications requiring individual passwords. Each of the passwords when called from the SIM, is encrypted as previously described, so that no password data leaves the SIM card 15 unencrypted.

In an alternative arrangement, the encrypted password is forwarded to the HLR 10 in the secure communication channel from SIM card 15 via MS1. The HLR 10 can be provided with a copy of the encryption key Kp as previously explained. Also the password encryption algorithm can be pre-loaded in the memory 32 of the HLR so that the encrypted password data can be decrypted and the resulting unencrypted data can be stored at the HLR, for example in memory 32 shown in Figure 4. The HLR 10 can then provide the password directly to the bank server 3 in response to a request for the password, without the need to perform password decryption at the banking server 3.
An example of this approach is illustrated in Figure 7. At step S 7.1 the secure session between MS1 and HLR 10 is opened as described with reference to Figure 6, and the banking application is opened at step S 7.2. The starting of the banking application by MS1 is notified to the banking server at step S 7.3. The banking application running on MS1 requests the password for the banking application from SIM 15 at step S 7.4 and the encrypted password information is supplied at step S 7.5. The encrypted password information is supplied at step S 7.6 through the secure channel to HLR 10. The encryption key Kp is sent at step S7.7 from SIM 15 to the HLR 10 through the secure channel.

Then at step S7.8, the processor 31 of HLR 10 decrypts the encrypted password information using the key received at step S 7.7 and a copy of the encryption algorithm held in memory 32 of the HLR 10. The banking server 3 at step S 7.9 requests the password from HLR 10 using a certificate to identify itself as described with reference to Figure 6. The decrypted password is then sent to the banking server 3 by the HLR 10 at step S 7.10 where it is authenticated at step S 7.11 as previously described with reference to Figure 6. If the authentication is successful, the banking session between the server 3 and MS1 is opened at step S 7.12.

In a further modification, the password encryption key Kp may be pre-stored on USIM 15 from the HLR 10 as one of a number of such keys e.g. 10,000, at the time that the subscriber signs up for the network 1 e.g. in a shop using a secure link to the HLR, without necessarily using over the air programming techniques. The HLR keeps a copy of the keys Kp programmed onto the USIM 15 in association with the customer record for the subscriber held by the HLR. The keys Kp are each used for a single password controlled session over the air, and then discarded. When all the keys have been used, the USIM 15 expires. The encrypted password data supplied at step S 7.5 in Figure 7 may be in this modification supplied directly to the HLR 10 without the password encryption key Kp supplied at step S 7.7, which is already held by the HLR 10 in its memory 32. The keys Kp may be numbered and details of the key number may be supplied to the HLR 10 from the USIM 15 to facilitate identification of the key concerned. The password is then decrypted at the HLR 10 using the password encryption algorithm that has been pre-loaded in the memory 32 of the HLR and the relevant stored key Kp. The resulting unencrypted data can be stored at the HLR 10, for example in memory 32 shown in Figure 4. The HLR 10 can then provide the password directly to the bank server 3 in response to a request for the password, without the need to perform password decryption at the banking server 3.

In another modification, the session key Kc is used as the password encryption key Kp. The session key Kc is produced at the start of a secure session as previously described using the algorithm A5 of the GSM Recommendations, and is available to the HLR 10 for the secure session. Thus the key Kc can be used at the HLR to decrypt password information encrypted at the SIM 15 and obtain decrypted password information.

The smart card 15 has the advantage of being a physical card that is removable from one terminal MS1 to be inserted in another similar terminal. However the functionality of the smart card 15 can be implemented in software on a terminal processor, as a so-called "soft-SIM" for which the SIM algorithms are implemented in software rather than on a processor embodied in a physically separate card.

The network management node, to which password information is sent, comprises a HLR in the example shown in Figure 1. However, other network management nodes can be used, e.g. the 3G home subscription server (HSS) or application servers that make use of a HLR/HSS. More generally, any secure server operated by a service provider with which the subscriber has a security protected communication channel can be used as the network management node.

Additional levels of security may be provided, so that either for each password access attempt or periodically, the SIM 15 and/or the HLR 10 requires extra conditions to be met before they release the password. For example the password may not be released unless the SIM 15 remains in the same terminal MS1 since the last request for the password, the number of password requests over a given period or the time since the password was last called. Also the password access may not be afforded if the terminal MS1 lies outside of a predetermined location e.g. indicated by the identity of the cell of the network 1 in which MS1 is located. If any of some of these conditions are not met, access to the password data either when encrypted from the SIM 15 or when unencrypted from the HLR 10, may be barred. Also, the password data stored on the SIM 15 or at the HLR 10 may have associated flags that set whether access is allowed. For example, if the SIM 15 stores more than one password, each may have its own security level set by an individual flag.

Also, in the preceding example, the banking server 3 need not participate directly in the password exchange. Instead, a web proxy server (not shown) may obtain the password as described herein, and pass it to the banking server, for example by pasting the password into an HTML application page and supplying the page to the banking server.

In a further example the SIM 15 is used to hold both a passcode and a password to provide access to an application 3' that requires both a passcode and a password. An example is a virtual private network (VPN). Both the password and the passcode for the VPN are stored on the SIM 15 such as to be protected by the PIN code for the SIM. To provide access to the VPN, the passcode and the password are supplied in encrypted form to the HLR 10 through the secure channel as previously described, where they are decrypted in any of the ways described previously.

The passcode and password are then supplied through the network 2 to the application server 3' to open access to the VPN for MS1. However, the passcode and password are only supplied if additional security checks are complied with. For example, the HLR may only release the passcode and password to the server 3' if the mobile station MS1 is in a cell of the network 1 that corresponds to the physical location where access by the VPN is authorised e.g. by means of a Bluetooth beacon or a WLAN at an office premises or a factory site, or by means of a GPS location or a particular cell ID for a cellular network. Also the server 3' may provide access to the VPN through a series of Bluetooth beacons and the relevant access codes will only be released from the HLR 10 if the mobile station MS1 is in the vicinity of one of the beacons. Further security tests to control release of the codes based on location history and access attempt history may be applied as described above.

In the examples described above, the smart card is in the form of a SIM for a 3G network. However, the smart card can be configured for use with 2G networks and other network configurations as well. For example, terminals that use a subscriber smart card can provide connectivity with satellite networks, WLANs WiMAX, Bluetooth enabled networks and others. For example it has been proposed to configure WLANs such that SIM-type authentication with a secure server acting as a network management node is required to gain access by a terminal to the WLAN.. Extensible authentication protocol (EAP) may be used to carry GSM/3G authentication messages between the terminal and the WLAN. Thus the invention can be used to send encrypted password information to the secure server from the SIM for such an arrangement, to be decrypted at the secure server and made available to network application nodes as previously described.

## Claims

1. A method of securely communicating password information in a network that comprises a user terminal provided with smart card functionality in which the password information is stored, a network application node to receive the password information, and a network management node for establishing a secure communication channel with the user terminal, comprising:
using the smart card functionality to encrypt the password information stored thereon with an encryption key, to provide encrypted password information,
passing the encrypted password information to the network,
passing data pertaining to the password to the network management node through the secure channel,
decrypting the encrypted password information at one of the nodes, and
sending data pertaining to the password from the network management node to the network application node, so as to provide the password unencrypted at the network application node.

2. A method according to claim 1 including:
passing the encrypted password information to the network application node,
passing the key from the smart card to the network management node through the secure channel, and
sending the key from the network management node to the network application node, so as to enable the encrypted password information to be decrypted at the network application node.

3. A method according to claim 2 including sending a request for the key from the network application node to the network management node and decrypting the encrypted password information at the network application node using the key.

4. A method according to claim 1 including
passing the encrypted password information to the network management node through the secure channel,
decrypting the password information at the network management node, and,
supplying the decrypted password information from the network management node to the to the network application node.

5. A method according to claim 4 including sending a request for the decrypted password information from the network application node to the network management node.

6. A method according to claim 4 or 5 including sending the key through secure channel to the network management node and decrypting the encrypted password information using the sent key.

7. A method according to claim 4, 5 or 6 including decrypting the encrypted password information at the network management node using a copy of the key used to encrypt the encrypted password information, the copy being held at the network management node.

8. A method according to any preceding claim including using the smart card functionality to encrypt the password information according to a predetermined algorithm, and holding the algorithm at the node where the encrypted password information is to be decrypted.

9. A method according to any preceding claim including using the decrypted password information to open a secure session between the user terminal and the application run by the network application node.

10. A method according to any preceding claim wherein the smart card functionality is embodied in a smart card that is removable from the terminal for interchange between terminal devices, such that the password is only transmitted from the smart card when encrypted thereby.

11. A network configured to perform a method as claimed in any preceding claim.

12. A network for securely communicating password information, comprising:
a user terminal provided with smart card functionality in which the password information is stored, and operable to encrypt the password information stored therein to provide encrypted password information, and to pass the encrypted password information to the network,
a network application node to receive the password information, and
a network management node for establishing a secure communication channel with the user terminal,
the network being so configured that data pertaining to the password is passed to the network management node through the secure channel, the encrypted password information is decrypted at one of the nodes, and data pertaining to the password is passed from the network management node to the network application node, for providing the password unencrypted at the network application node.

13. A network according to claim 11 or 12 wherein the network management node comprises the HLR of a cellular telecommunications network.

14. A network according to claim 13 wherein the telecommunications network is coupled to a wide area network to which the application node is connected.

15. A network according to claim 13 or 14 wherein the user terminal comprises a mobile station for the telecommunications network.

16. A network according to any one of claims 11 to 15 wherein the application node comprises a banking server.

17. A method of operating a user terminal to communicate password information securely in a network comprising a network application node to receive the password information, and a network management node for establishing a secure communication channel with the user terminal, the user terminal being provided with a smart card functionality in which the password information is stored, the method comprising:
using the smart card functionality to encrypt the password information stored thereon with an encryption key, to provide encrypted password information,
sending the encrypted password information to be received by one of said nodes, and
passing data pertaining to the password to the network management node through the secure channel, to enable the encrypted password information to be decrypted at one of the nodes and provided unencrypted at the network application node.

18. A computer program to be run by a processor of a user terminal to perform a method as claimed in claim 17.

19. A user terminal for communicating password information securely in a network comprising a network application node to receive the password information, and a network management node for establishing a secure communication channel with the user terminal, the user terminal comprising
smart card functionality in which the password information is stored, operable to encrypt the password information stored therein with an encryption key, to provide encrypted password information, and
a transmitter arrangement operable to pass the encrypted password information to be received by one of said nodes, and to pass data pertaining to the password to the network management node through the secure channel, to enable the encrypted password information to be decrypted at one of the nodes and provide the decrypted password at the network application node.

20. A smart card for a user terminal to communicate password information securely in a network that comprises a network application node to receive the password information for providing access for the user terminal to an application through the node, and a network management node for establishing a secure communication channel with the user terminal, the smart card including
a memory which stores the password information, and
a processor operable to encrypt the password information stored thereon with an encryption key, to provide encrypted password information, such as to pass the encrypted password information to the user terminal for transmission to the network for providing access to the application run by the network application node.

21. A smart card according to claim 20 wherein the memory stores a plurality of encryption keys each usable once only to encrypt the password information.

22. A smart card according to claim 20 or 21, comprising a SIM wherein the memory stores an IMSI and Ki for a subscriber.

23. A smart card according to claim 20, 21 or 22 including an encryption algorithm stored therein to encrypt the password information and provide said encrypted password information.

24. A smart card according to any one of claims 20 to 23 wherein the memory stores a plurality of different passwords for providing access to individual applications run by a plurality of network application nodes.

25. A network management node for establishing a secure communication channel with a user terminal provided with smart card functionality that stores password information, to be encrypted and sent as encrypted password information for use in providing access for a session between the user terminal and an application run by a network application node, the network management node comprising:
a memory to receive data pertaining to the password information from the from the smart card through the secure channel, and
a processor configuration operable to receive a request pertaining to the password from the network application node, and the processor configuration being operable to send data pertaining to the password information to the network application node in response to the request, so as to enable the password information when decrypted to prove access to the application run by the network application node.

26. A network management node according to claim 26 wherein the memory is operable to receive from the user terminal through the secure channel, a key for decrypting the encrypted password information, and to supply the key to the network application node to decrypt the encrypted password information at the application node.

27. A network management node according to claim 26 wherein the memory is operable to receive the encrypted password information from the user terminal through the secure channel, and the processor configuration is operable to decrypt the encrypted password information and supply the decrypted password information to the network application node.

28. A network application node configured for use in a method as claimed in any one of claims 1 to 10.

29. A method of securely communicating password information in a network, substantially as hereinbefore described with reference to the accompanying drawings.

30. A terminal for securely communicating password information in a network, substantially as hereinbefore described with reference to the accompanying drawings.

31. A smart card for securely communicating password information in a network, substantially as hereinbefore described with reference to the accompanying drawings.

32. A network management node for securely communicating password information in a network, substantially as hereinbefore described with reference to the accompanying drawings.

33. A network application node for securely communicating password information in a network, substantially as hereinbefore described with reference to the accompanying drawings.
